# EUROPEAN PATENT SPECIFICATION

(11) **EP 4 625 658 B1**
(45) Date of publication and mention of the grant of the patent: **14.10.2026**
(21) Application number: 25166806.7
(22) Date of filing: 27.03.2025
(51) Int. Cl.: H01M 50/242, H01M 50/291, H01M 50/342, H01M 50/367, H01M 50/204, H01M 10/613, H01M 10/6551, H01M 50/24, H01M 50/244

(54) **BATTERY BOX AND BATTERY PACK**
BATTERIEKASTEN UND BATTERIEPACK
BOÎTIER DE BATTERIE ET BLOC-BATTERIE

(30) Priority: 28.03.2024 CN 202420636011 U; 16.08.2024 WO PCT/CN2024/112590
(43) Date of publication of application: 01.10.2025
(73) Proprietor: Eve Energy Co., Ltd., Huizhou, Guangdong 516006 (CN)
(72) Inventor: HUANG, Shenhua, Huizhou, 516006 (CN)
(74) Representative: Prinz & Partner mbB

(56) References cited:
- EP-A1- 4 456 301
- EP-A1- 4 471 961
- WO-A1-2024/026778
- CN-U- 219 937 300
- CN-U- 220 042 111

## Description

The present disclosure relates to the field of battery technology, for example, a battery box and a battery pack.

With the rapid development of the new-energy vehicle industry, lithium battery modules have been widely applied in new-energy vehicles. A lithium battery module includes a battery box body and a cell module. The cell module is disposed within the battery box body. To prevent the lithium battery module from affecting the safety of other surrounding cells when thermal runaway occurs to a certain cell, a corresponding thermal runaway design is usually configured. In the related art, the thermal runaway design of the lithium battery module is to dispose a pressure relief channel on the battery box body to quickly discharge a thermal runaway gas of a single cell, thereby preventing the thermal runaway from affecting other cells.

CN 220 042 111 U introduces a battery box body and a battery pack in which a buffer supporting piece is provided for releasing the filler under the condition of fracture.

CN 219 937 300 U introduces a battery and a power utilization device in which a pressure relief component and a first blocking member are configured for releasing the discharge of the single battery body.

WO 2024/026778 A1 introduces a battery and an electric device in which a discharge passage is configured for communicating with the interior of the battery cell via the pressure relief mechanism when the pressure relief mechanism is actuated.

The pressure relief channel is usually formed by spacing apart a tray supporting the cell module and a bottom guard plate of the battery box body. As such, only the edge of the bottom guard plate is connected to the frame of the box body, and a middle portion of the bottom guard plate is suspended, resulting in poor connection strength and anti-impact strength. The invention is set out in the appended set of claims.

In some embodiments of the present disclosure, the bottom guard plate is detachably connected to the box body so that the production convenience of the battery box can be effectively improved, and the subsequent replacement of the bottom guard plate can be facilitated, thereby reducing the maintenance cost of the battery box; the bracket is connected to the bottom guard plate by the suction disc, which is convenient for dismantling and mounting and effectively improves the connection strength of a middle region of the bottom guard plate. The support of the bottom guard plate by the suction disc can also improve the anti-impact strength of the bottom guard plate and reduce the deformation of the bottom guard plate under external impact. Moreover, when the thermal runaway gas of the cell assembly enters the pressure relief channel, an increase in air pressure within the pressure relief channel enables the suction disc to be separated from the connection to the bottom guard plate, and the bottom guard plate bulges outwards in the direction facing away from the bracket under the push of the air pressure of the thermal runaway gas to increase the volume of the pressure relief channel, thereby improving the use safety of the battery box.
FIG. 1 is a diagram illustrating the structure of a battery box according to some embodiments of the present disclosure.
FIG. 2 is a cross-sectional view of a battery box according to some embodiments of the present disclosure.
FIG. 3 is a partial structural diagram of a battery box according to some embodiments of the present disclosure.

### Reference list

- 1: box body
- 11: accommodation cavity
- 12: pressure relief channel
- 13: exhaust port
- 14: guide groove
- 2: bottom guard plate
- 3: bracket
- 31: communication hole
- 32: insertion groove
- 33: support portion
- 4: suction disc
- 5: platen

Embodiments of the present disclosure are described below in conjunction with the drawings, and the described embodiments are some related embodiments of the present disclosure.

In the description of the present disclosure, the terms "joined", "connected", and "secure" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the terms in the present disclosure may be understood based on specific situations.

In the present disclosure, unless otherwise expressly specified and limited, when a first feature is described as being "on" or "below" a second feature, the first feature and the second feature may be in direct contact or be in contact via another feature between the two features instead of being in direct contact. Moreover, when the first feature is described as being "on", "above", or "over" the second feature, the first feature is right on, above, or over the second feature, the first feature is obliquely on, above, or over the second feature, or the first feature is at a higher level than the second feature. When the first feature is described as being "under", "below", or "underneath" the second feature, the first feature is right under, below, or underneath the second feature, the first feature is obliquely under, below, or underneath the second feature, or the first feature is at a lower level than the second feature.

Embodiments of the present disclosure provide a battery box and a battery pack, which have a simple structure and achieve a high connection strength and a high anti-impact strength of a bottom guard plate.

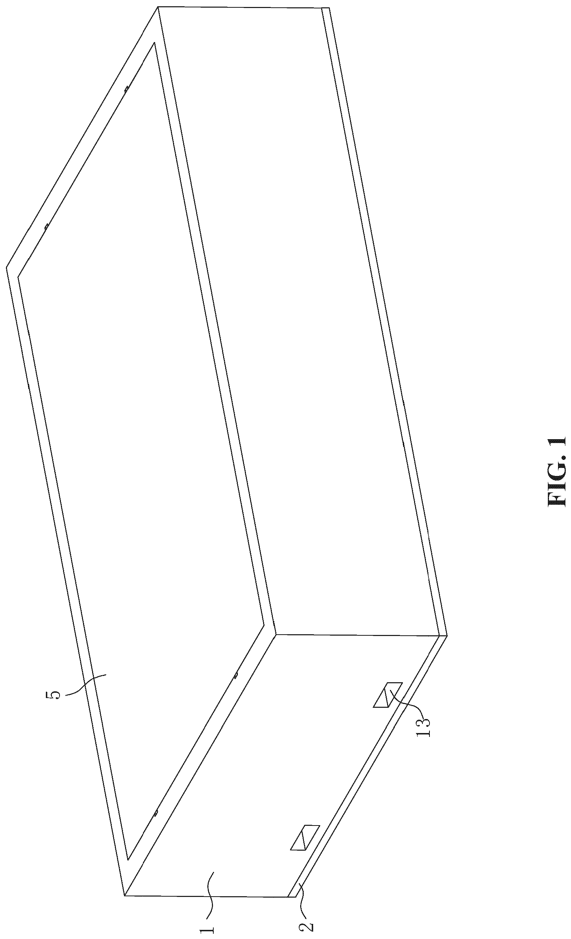

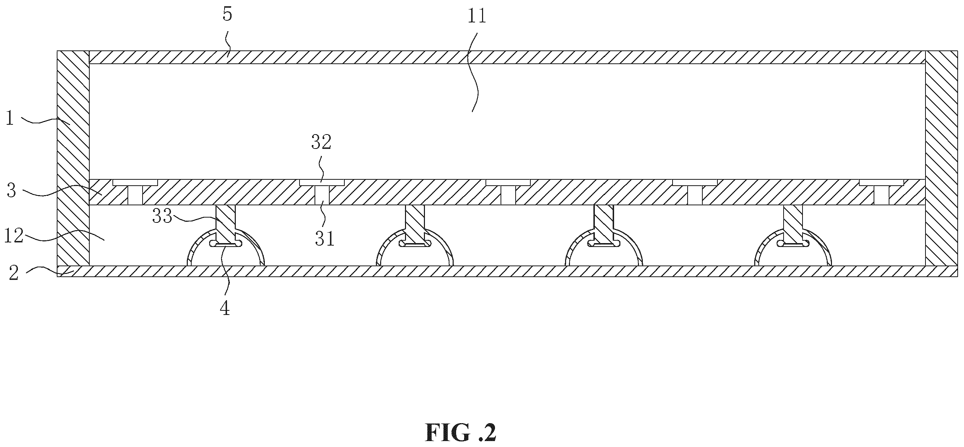

As shown in FIGS. 1 and 2, the battery box provided in an embodiment of the present disclosure includes a box body 1, a bottom guard plate 2, a bracket 3, and suction discs 4. The box body 1 is provided with an accommodation cavity 11. One side of the box body 1 along the first direction is provided with an opening communicating with the accommodation cavity 11. The bottom guard plate 2 is detachably connected to the opening. The bracket 3 is mounted on the cavity wall of the accommodation cavity 11. The bracket 3 and the bottom guard plate 2 are spaced apart to form a pressure relief channel 12. The pressure relief channel 12 is configured to relieve a thermal runaway gas of a cell assembly on the bracket 3. One side of the bracket 3 facing the bottom guard plate 2 is provided with the suction discs 4. The suction discs 4 abut against the bottom guard plate 2.

When the battery box is in a normal use state, the bottom guard plate 2 is located at the bottom, and the first direction is the height direction. The bottom guard plate 2 is detachably connected to the box body 1, that is, a complex integral component is split into multiple simple parts for production, so that the production convenience of the battery box can be effectively improved, and the subsequent replacement of the bottom guard plate 2 can be facilitated when the bottom guard plate 2 is damaged by impact, thereby reducing the maintenance cost of the battery box. The bracket 3 is connected to the bottom guard plate 2 by the suction discs 4. For one aspect, this is convenient for dismantling and mounting, has a convenient connection relative to a detachable connection such as a bolt connection, reduces operation intensity, has good sealing performance at the connection position, ensures the sealing performance of the pressure relief channel 12, and reduces the situation where moisture or other impurities enters the battery box and affects the normal use of the cell assembly; for another aspect, this can effectively improve the connection strength of a middle region of the bottom guard plate 2, and the support of the bottom guard plate 2 by the suction discs 4 can also improve the anti-impact strength of the bottom guard plate 2, that is, when the bottom guard plate 2 is impacted by the outside, the support force provided by the suction discs 4 can alleviate part of the impact force and reduce the deformation of the bottom guard plate 2 under the external impact. Moreover, when the thermal runaway gas of the cell assembly enters the pressure relief channel 12, an increase in air pressure within the pressure relief channel 12 enables the suction discs 4 to be separated from the connection to the bottom guard plate 2, and the bottom guard plate 2 bulges outwards in the direction facing away from the bracket 3 under the push of the air pressure of the thermal runaway gas to increase the volume of the pressure relief channel 12, thereby improving the use safety of the battery box.

Exemplarily, first threaded holes are configured at the bottom of the box body 1, and the bottom guard plate 2 is provided with multiple first through holes. First bolts are used for passing through the multiple first through holes and being screwed into the first threaded holes to connect the bottom guard plate 2 to the box body 1. The threaded connection is convenient for dismantling and mounting and is stable. In other embodiments, the bottom guard plate 2 may also be provided with snaps, and the box body 1 may also be provided with slots. The snaps snap into the slots for connection respectively.

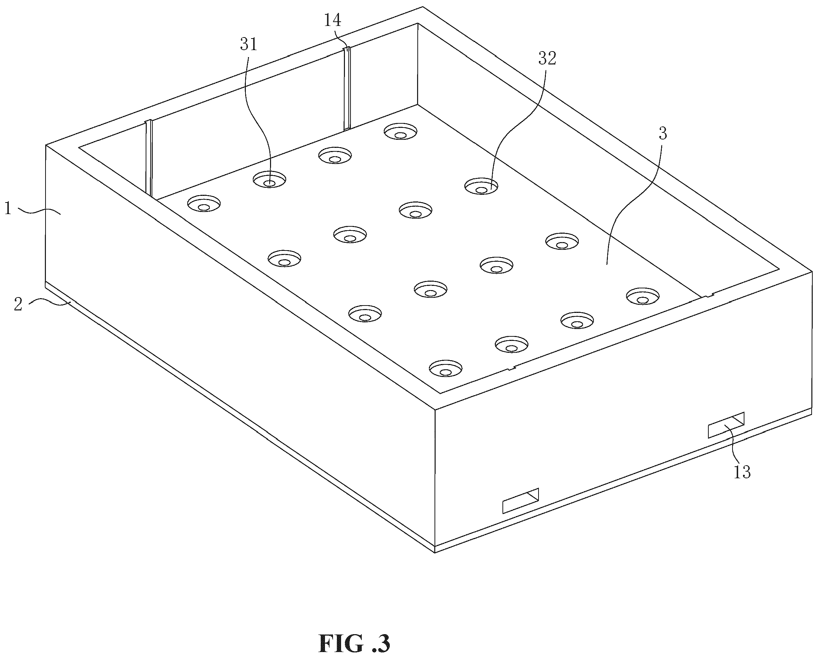

In some embodiments, as shown in FIGS. 2 and 3, the bracket 3 is provided with multiple communication holes 31 penetrating the bracket 3, the multiple communication holes 31 are in one-to-one correspondence with cells of the cell assembly, and the multiple communication holes 31 are disposed opposite to explosion-proof valves of the cells respectively. The multiple communication holes 31 are disposed so that a gas generated when a cell undergoes thermal runaway can be quickly transmitted to the pressure relief channel 12. A pressure relief valve of each cell is provided with a respective communication hole 31 so that the pressure relief distance can be short, and the impact of the spread of the high temperature of the thermal runaway gas on other cells can be reduced.

In some embodiments, as shown in FIGS. 2 and 3, multiple insertion grooves 32 are concavely formed on one side of the bracket 3 facing away from the bottom guard plate 2, the multiple communication holes 31 are configured to penetrate the groove bottoms of the multiple insertion grooves 32, and the multiple insertion grooves 32 are configured for the cells to insert. The multiple insertion grooves 32 are disposed so that the cells can be positioned when being mounted on the bracket 3, thereby improving the positioning accuracy of mounting the cells. The groove walls of the multiple insertion grooves 32 limit the peripheral sides of the cells so that the connection strength of mounting the cells can be enhanced.

In some embodiments, as shown in FIG. 2, multiple support portions 33 spaced apart are convexly arranged on the side of the bracket 3 facing the bottom guard plate 2, and each support portion 33 is provided with at least one suction disc 4. The multiple support portions 33 are disposed so that the suction discs 4 can be ensured to be connected to the bottom guard plate 2 with the bottom guard plate 2 and the bracket 3 at a certain distance, thereby strengthening the support of the suction discs 4 by the bracket 3.

In some embodiments, as shown in FIG. 1, the box body 1 is provided with exhaust ports 13, and the exhaust ports 13 communicate with the pressure relief channel 12. The exhaust ports 13 are disposed so that the thermal runaway gas generated by a cell can be quickly discharged to the exterior of the box body 1, and the thermal runaway gas can be prevented from accumulating and exploding within the pressure relief channel 12. In this embodiment, the exhaust ports 13 are disposed on the sidewall of the box body 1. Compared with the exhaust ports 13 disposed on the bottom guard plate 2, this configuration can prevent the exhaust ports 13 from facing the ground during daily use and reduce the occurrence of impurities or moisture entering the pressure relief channel 12.

In some embodiments, the battery box further includes explosion-proof sheets configured to seal the exhaust ports 13. The explosion-proof sheets can be broken through when the thermal runaway gas reaches a certain air pressure and open the exhaust ports 13 so that the pressure relief channel 12 can communicate with the outside. The explosion-proof sheets are disposed so that the explosion-proof sheets can seal the exhaust ports 13 during daily use, thereby ensuring the sealing performance of the pressure relief channel 12, preventing external impurities from entering the pressure relief channel 12 and affecting the use of the cells, and improving the use safety of the box body 1.

In some embodiments, the thickness of the center of an explosion-proof sheet is less than the thickness of the edge of the explosion-proof sheet. This design can ensure the connection strength between the explosion-proof sheets and the box body 1 and can also enable the explosion-proof sheets to explode preferentially from weak regions under the impact of the thermal runaway gas, thereby ensuring the use safety of the explosion-proof sheets.

In some embodiments, the bracket 3 is detachably connected to the cavity wall of the accommodation cavity 11. The detachable configuration can facilitate the production of the battery box, thereby reducing the production cost, and can enable the separate replacement of the bracket 3 and the box body 1 during later maintenance, thereby achieving a low maintenance cost. In this embodiment, the bracket 3 is provided with second through holes, and the box body 1 is provided with second threaded holes. Second bolts pass through the second through holes and are screwed into the second threaded holes to securely connect the bracket 3 to the box body 1 respectively, which has a stable connection and ensures the connection stability of the bracket 3. In other embodiments, the bracket 3 may also be connected to the box body 1 in other detachable manners such as a snap connection.

In some embodiments, guide grooves 14 are arranged on the cavity wall of the accommodation cavity 11, and the length of a guide groove 14 extends along the first direction; the bracket 3 is provided with guide portions, and the guide portions are inserted into the guide grooves 14. The guide portions are in fit with the guide grooves 14 so that the guidance of the bracket 3 during mounting can be strengthened, and the mounting accuracy of the connection of the bracket 3 can be improved.

As shown in FIGS. 1 to 3, an embodiment of the present disclosure further provides a battery pack. The battery pack includes a cell assembly and the battery box of any one of the preceding embodiments. The cell assembly is mounted on the bracket 3 of the battery box, and the cell assembly is located on the other side of the bracket 3 facing away from the bottom guard plate 2. The bracket 3 and the bottom guard plate 2 within the battery box of the battery pack are spaced apart to form the pressure relief channel 12 to facilitate the gradual discharge of the thermal runaway gas of a cell and improve the use safety of the battery pack.

In some embodiments, the battery pack further includes a platen 5. A mounting opening is configured on one side of the box body 1 of the battery box facing away from the bottom guard plate 2 of the battery box, the mounting opening communicates with the accommodation cavity 11 of the box body 1, the platen 5 is disposed at the mounting opening, and the platen 5 is configured to tightly abut against the cell assembly. It is to be understood that the mounting sequence of a cell module is that the bottom guard plate 2 is first mounted on the box body 1 to seal the opening of the box body 1, and the bracket 3 provided with the cell assembly is then mounted into the accommodation cavity 11; during mounting, only the bracket 3 is required to be mounted, and the suction discs 4 are adsorbed onto the bottom guard plate 2 to complete the reinforced connection of the middle of the bottom guard plate 2, and the platen 5 is finally mounted into the box body 1 to tightly abut against the cell assembly to ensure the mounting stability of the cell assembly.

In some embodiments, an avoidance hole is configured at a position of a pole protruding from each cell of the cell assembly corresponding to the platen 5. The avoidance hole is disposed so that the space occupied by the pole protruding from each cell can be reduced, thereby improving the space utilization within the accommodation cavity 11. Moreover, the restriction of the hole wall of the avoidance hole on the pole can enhance the mounting stability of each cell.

In some embodiments, during the assembly process of the battery pack, a potting sealant may be injected into the platen 5 and the bracket 3 to enhance the mounting stability of the cell assembly and the thermal insulation between the cells.

In some embodiments, one side of the bottom guard plate 2 facing the bracket 3 may also be provided with a cold gel pad. The cold gel pad has good thermal conductivity and can accelerate the heat dissipation of the cell assembly or the cooling of the thermal runaway gas.

In the description of the present disclosure, it is to be understood that the orientation or position relationships indicated by terms such as "above" and "below" are the orientation or position relationships shown in the drawings. These orientation or position relationships are only for ease of description and simplifying operations and do not indicate or imply that a referred device or element must have a specific orientation and must be configured and operated in a specific orientation.

In the description of the Specification, the description of reference terms "an embodiment" and the like means that specific features, structures, materials or characteristics described in connection with the embodiment are included in at least one embodiment or example of the present disclosure. In the Specification, the schematic representation of the preceding terms does not necessarily refer to the same embodiment.

Moreover, it is to be understood that though this Specification is described in terms of the embodiments, not each embodiment includes only one independent technical solution. Such description mode of the Specification is for the sake of clarity, and those skilled in the art should regard the Specification as a whole. The technical solutions in the embodiments may also be appropriately combined to form other embodiments which may be understood by those skilled in the art.

## Claims

1. A battery box, comprising a box body (1), a bottom guard plate (2), a bracket (3), and a suction disc (4);
wherein the box body (1) is provided with an accommodation cavity (11), one side of the box body (1) along a first direction is provided with an opening communicating with the accommodation cavity (11), the bottom guard plate (2) is detachably connected to the opening, the bracket (3) is mounted on a cavity wall of the accommodation cavity (11), the bracket (3) and the bottom guard plate (2) are spaced apart to form a pressure relief channel (12); and
wherein the pressure relief channel (12) is configured to relieve a thermal runaway gas of a cell assembly on the bracket (3);
**characterized in that**, one side of the bracket (3) facing the bottom guard plate (2) is provided with the suction disc (4), and the suction disc (4) is configured to abut against the bottom guard plate (2).

2. The battery box of claim 1, wherein a plurality of support portions (33) spaced apart are convexly arranged on the side of the bracket (3) facing the bottom guard plate (2), and each of the plurality of support portions (33) is provided with at least one suction disc (4).

3. The battery box of claim 1 or 2, wherein the box body (1) is provided with an exhaust port (13), and the exhaust port (13) is configured to communicate with the pressure relief channel (12).

4. The battery box of claim 3, further comprising an explosion-proof sheet configured to seal the exhaust port (13).

5. The battery box of claim 1, wherein the bracket (3) is detachably connected to the cavity wall of the accommodation cavity (11).

6. The battery box of claim 5, wherein a guide groove (14) is concavely arranged on the cavity wall of the accommodation cavity (11), a length of the guide groove (14) extends along the first direction, and the bracket (3) is provided with a guide portion, and the guide portion is inserted into the guide groove (14).

7. A battery pack, comprising a cell assembly and the battery box of any one of claims 1 to 6, wherein the cell assembly is mounted on the bracket (3) of the battery box, and the cell assembly is located on one side of the bracket facing away from the bottom guard plate (2).

8. The battery pack of claim 7, further comprising a platen (5), wherein a mounting opening is configured on one side of the box body (1) of the battery box facing away from the bottom guard plate (2) of the battery box, the mounting opening communicates with the accommodation cavity (11) of the box body (1), the platen is disposed at the mounting opening, and the platen (5) is configured to tightly abut against the cell assembly.

9. The battery pack of claim 7 or 8, wherein the bracket (3) is provided with a plurality of communication holes (31) penetrating the bracket (3), the plurality of communication holes (31) are in one-to-one correspondence with cells of the cell assembly, and the plurality of communication holes (31) are disposed opposite to explosion-proof valves of the cells respectively.

10. The battery pack of claim 9, wherein a plurality of insertion grooves (32) are concavely formed on one side of the bracket (3) facing away from the bottom guard plate (2), the plurality of communication holes (31) are configured to penetrate groove bottoms of the plurality of insertion grooves (32), and the plurality of insertion grooves (32) are configured for the cells to insert.

## Patentansprüche

1. Batteriekasten, umfassend einen Kastenkörper (1), eine unterseitige Schutzplatte (2), eine Halterung (3) und eine Saugscheibe (4), wobei der Kastenkörper (1) mit einem Aufnahmehohlraum (11) versehen ist, eine Seite des Kastenkörpers (1) entlang einer ersten Richtung mit einer Öffnung, die mit dem Aufnahmehohlraum (11) kommuniziert, versehen ist, die unterseitige Schutzplatte (2) lösbar mit der Öffnung verbunden ist, die Halterung (3) an einer Hohlraumwand des Aufnahmehohlraums (11) montiert ist, die Halterung (3) und die unterseitige Schutzplatte (2) voneinander beabstandet sind, um einen Druckentlastungskanal (12) zu bilden, und
wobei der Druckentlastungskanal (12) ausgelegt ist, um Gase abzuleiten, die bei einem thermischen Durchgehen eines auf der Halterung (3) angeordneten Zellverbunds entstehen,
**dadurch gekennzeichnet, dass** eine Seite der Halterung (3), die der unterseitigen Schutzplatte (2) zugewandt ist, mit der Saugscheibe (4) versehen ist und die Saugscheibe (4) ausgelegt ist, um an der unterseitigen Schutzplatte (2) anzuliegen.

2. Batteriekasten nach Anspruch 1, wobei eine Vielzahl von beabstandeten Stützabschnitten (33) konvex an der Seite der Halterung (3), die der unterseitigen Schutzplatte (2) zugewandt ist, angeordnet sind und jeder der Vielzahl von Stützabschnitten (33) mit mindestens einer Saugscheibe (4) versehen ist.

3. Batteriekasten nach Anspruch 1 oder 2, wobei der Kastenkörper (1) mit einem Entlüftungsanschluss (13) versehen ist und der Entlüftungsanschluss (13) ausgelegt ist, um mit dem Druckentlastungskanal (12) zu kommunizieren.

4. Batteriekasten nach Anspruch 3, ferner umfassend ein Explosionsschutzblatt, das ausgelegt ist, um den Entlüftungsanschluss (13) abzudichten.

5. Batteriekasten nach Anspruch 1, wobei die Halterung (3) lösbar mit der Hohlraumwand des Aufnahmehohlraums (11) verbunden ist.

6. Batteriekasten nach Anspruch 5, wobei eine Führungsnut (14) konkav an der Hohlraumwand des Aufnahmehohlraums (11) angeordnet ist, sich eine Länge der Führungsnut (14) entlang der ersten Richtung erstreckt und die Halterung (3) mit einem Führungsabschnitt versehen ist und der Führungsabschnitt in die Führungsnut (14) eingefügt ist.

7. Batteriepack, umfassend eine Zellanordnung und den Batteriekasten nach einem der Ansprüche 1 bis 6, wobei die Zellanordnung auf der Halterung (3) des Batteriekastens montiert ist und sich die Zellanordnung auf einer Seite der Halterung befindet, die von der unterseitigen Schutzplatte (2) abgewandt ist.

8. Batteriepack nach Anspruch 7, ferner umfassend eine Andrückplatte (5), wobei eine Montageöffnung auf einer Seite des Kastenkörpers (1) des Batteriekastens, die der unterseitigen Schutzplatte (2) des Batteriekastens abgewandt ist, ausgelegt ist, wobei die Montageöffnung mit dem Aufnahmehohlraum (11) des Kastenkörpers (1) kommuniziert, die Andrückplatte an der Montageöffnung angeordnet ist und die Andrückplatte (5) ausgelegt ist, um dicht an der Zellanordnung anzuliegen.

9. Batteriepack nach Anspruch 7 oder 8, wobei die Halterung (3) mit einer Vielzahl von Kommunikationslöchern (31) versehen ist, die die Halterung (3) durchdringen, wobei die Vielzahl von Kommunikationslöchern (31) in einer Einszu-eins-Entsprechung mit Zellen der Zellanordnung ist und die Vielzahl von Kommunikationslöchern (31) jeweils gegenständig zu Explosionsschutzventilen der Zellen angeordnet ist.

10. Batteriepack nach Anspruch 9, wobei eine Vielzahl von Einfügenuten (32) konkav auf einer Seite der Halterung (3), die der unterseitigen Schutzplatte (2) abgewandt ist, gebildet ist, die Vielzahl von Kommunikationslöchern (31) ausgelegt ist, um Nutunterseiten der Vielzahl von Einfügenuten (32) zu durchdringen, und die Vielzahl von Einfügenuten (32) zum Einfügen der Zellen ausgelegt ist.

## Revendications

1. Boîtier de batterie, comprenant un corps de boîtier (1), une plaque de protection inférieure (2), un support (3) et un disque d'aspiration (4) ;
dans lequel le corps de boîtier (1) est pourvu d'une cavité de réception (11), un côté du corps de boîtier (1) le long d'une première direction est pourvu d'une ouverture en communication avec la cavité de réception (11), la plaque de protection inférieure (2) est reliée de manière amovible à l'ouverture, le support (3) est monté sur une paroi de cavité de la cavité de réception (11), le support (3) et la plaque de protection inférieure (2) sont espacés pour former un canal de décompression (12) ; et
dans lequel le canal de décompression (12) est configuré pour relâcher un gaz d'emballement thermique d'un ensemble de cellules sur le support (3) ;
**caractérisé en ce qu'**un côté du support (3) faisant face à la plaque de protection inférieure (2) est pourvu du disque d'aspiration (4), et le disque d'aspiration (4) est configuré pour venir en butée contre la plaque de protection inférieure (2).

2. Boîtier de batterie selon la revendication 1, dans lequel une pluralité de parties de support (33) espacées est agencée de manière convexe sur le côté du support (3) faisant face à la plaque de protection inférieure (2), et chacune de la pluralité de parties de support (33) est pourvue d'au moins un disque d'aspiration (4).

3. Boîtier de batterie selon la revendication 1 ou 2, dans lequel le corps de boîtier (1) est pourvu d'un port d'échappement (13), et le port d'échappement (13) est configure pour être en communication avec le canal de décompression (12).

4. Boîtier de batterie selon la revendication 3, comprenant en outre une feuille antidéflagrante configurée pour sceller le port d'échappement (13).

5. Boîtier de batterie selon la revendication 1, dans lequel le support (3) est relié de manière amovible à la paroi de cavité de la cavité de réception (11).

6. Boîtier de batterie selon la revendication 5, dans lequel une rainure de guidage (14) est agencée de manière concave sur la paroi de cavité de la cavité de réception (11), une longueur de la rainure de guidage (14) s'étend le long de la première direction, et le support (3) est pourvu d'une partie de guidage, et la partie de guidage est insérée dans la rainure de guidage (14).

7. Bloc-batterie, comprenant un ensemble de cellules et le boîtier de batterie selon l'une quelconque des revendications 1 à 6, dans lequel l'ensemble de cellules est monté sur le support (3) du boîtier de batterie, et l'ensemble de cellules est situé sur un côté du support orienté à l'opposé de la plaque de protection inférieure (2).

8. Bloc-batterie selon la revendication 7, comprenant en outre un plateau (5), dans lequel une ouverture de montage est configurée sur un côté du corps de boîtier (1) du boîtier de batterie orienté à l'opposé de la plaque de protection inférieure (2) du boîtier de batterie, l'ouverture de montage est en communication avec la cavité de réception (11) du corps de boîtier (1), le plateau est disposé au niveau de l'ouverture de montage, et le plateau (5) est configuré pour venir étroitement en butée contre l'ensemble de cellules.

9. Bloc-batterie selon la revendication 7 ou 8, dans lequel le support (3) est pourvu d'une pluralité de trous de communication (31) pénétrant dans le support (3), la pluralité de trous de communication (31) est en correspondance biunivoque avec des cellules de l'ensemble de cellules, et la pluralité de trous de communication (31) est disposée à l'opposé de soupapes antidéflagrantes des cellules, respectivement.

10. Bloc-batterie selon la revendication 9, dans lequel une pluralité de rainures d'insertion (32) est formée de manière concave sur un côté du support (3) orienté à l'opposé de la plaque de protection inférieure (2), la pluralité de trous de communication (31) est configurée pour pénétrer des fonds de rainure de la pluralité de rainures d'insertion (32), et la pluralité de rainures d'insertion (32) est configurée pour l'insertion des cellules.
